# EUROPÄISCHE PATENTSCHRIFT

(11) **EP 2 901 458 B1**
(45) Veröffentlichungstag und Bekanntmachung des Hinweises auf die Patenterteilung: **02.08.2023**
(21) Anmeldenummer: 13770407.8
(22) Anmeldetag: 25.09.2013
(51) Int. Cl.: H05G 2/00

(54) **STRAHLFÜHRUNGSEINRICHTUNG UND VERFAHREN ZUM EINSTELLEN DES ÖFFNUNGSWINKELS EINES LASERSTRAHLS**
BEAM-GUIDING DEVICE AND A METHOD FOR ADJUSTING THE OPENING ANGLE OF A LASER BEAM
SYSTÈME DE GUIDAGE DE RAYONNEMENT ET PROCÉDÉ DE RÉGLAGE DE L'ANGLE D'OUVERTURE D'UN RAYON LASER

(30) Priorität: 27.09.2012 DE 102012217520
(43) Veröffentlichungstag der Anmeldung: 05.08.2015
(73) Patentinhaber: TRUMPF Lasersystems for Semiconductor Manufacturing GmbH, 71254 Ditzingen (DE)
(72) Erfinder: LAMBERT, Martin, 71404 Korb (DE)
(74) Vertreter: Kohler Schmid Möbus Patentanwälte
(86) Internationale Anmeldenummer: PCT/EP2013/002872
(87) Internationale Veröffentlichungsnummer: WO 2014/048563

(56) Entgegenhaltungen:
- EP-A1- 1 184 946
- CN-U- 201 552 386
- DE-A1-102009 044 426
- US-A- 6 128 138
- US-A1- 2007 001 131
- US-A1- 2011 140 008

## Beschreibung

Die vorliegende Erfindung betrifft eine Strahlführungseinrichtung zur Führung eines Laserstrahls von einer Treiberlasereinrichtung in Richtung auf eine Zielposition zur Erzeugung von EUV-Strahlung, umfassend: eine Einrichtung zur Vergrößerung oder zur Verkleinerung des Strahldurchmessers des Laserstrahls, mit: einem ersten Off-Axis Parabolspiegel mit einer ersten, konvex gekrümmten reflektierenden Oberfläche undeinem zweiten Off-Axis Parabolspiegel mit einer zweiten, konkav gekrümmten reflektierenden Oberfläche, und eine Bewegungseinrichtung, die ausgebildet ist, zur Veränderung des Öffnungswinkels des Laserstrahls einen Abstand zwischen der ersten und der zweiten reflektierenden Oberfläche zu verändern. Die Erfindung betrifft auch ein zugehöriges Verfahren.

Eine solche Strahlführungseinrichtung ist in der WO 2007/001131 A1 beschrieben.

Eine Strahlführungseinrichtung für ein EUV-Strahlerzeugungsvorrichtung mit einer Einrichtung zur Vergrößerung des Strahldurchmessers (Strahlaufweitung), welche in einem Ausführungsbeispiel zwei off-axis Parabolspiegel aufweist, ist aus der US 2011/0140008 A1 bekannt geworden. Die dort beschriebene Strahlführungseinrichtung dient zur Führung von Laserstrahlung, die in einem Treiberlasersystem erzeugt und verstärkt wurde. Die Strahlführungseinrichtung führt den Laserstrahl von dem Treiberlasersystem zu einem fokussierenden Element bzw. zu einer Fokussiereinrichtung, welche dazu dient, den Laserstrahl an der Zielposition zu fokussieren. An der Zielposition wird ein Target-Material bereitgestellt, welches bei der Bestrahlung mit dem Laserstrahl in einen Plasma-Zustand übergeht und hierbei EUV-Strahlung emittiert.

Bei der Bestrahlung mit dem Laserstrahl wird typischer Weise ein Teil des Target-Materials (z.B. Zinn) verdampft, der sich auf den optischen Oberflächen von optischen Elementen ablagert, die in der Nähe der Zielposition angeordnet sind. Um diesem Problem zu begegnen, wird als Treiberlaser in der Regel ein CO₂-Laser verwendet: CO₂-Laserstrahlung wird aufgrund ihrer hohen Wellenlänge von ca. 10,6 µm auch von optischen Elementen reflektiert, die eine vergleichsweise raue optische Oberfläche aufweisen, wie sie durch Zinn-Ablagerungen hervorgerufen wird. Die Verwendung eines Treiberlasers in Form eines CO₂-Lasers ermöglicht zudem bei bestimmten Target-Materialien, z.B. Zinn, eine hohe Konversionseffizienz zwischen der Eingangsleistung des Treiberlasers und Ausgangsleistung der EUV-Strahlung.

Die zur Erzeugung von EUV-Strahlung verwendete CO₂-Laserstrahlung weist eine hohe Strahlungsleistung (z.B. größer 1kW) auf, die typischer Weise vergleichsweise große Strahldurchmesser bedingt, um die Intensität der Laserstrahlung auf den optischen Oberflächen nicht zu groß werden zu lassen.Bei der Strahlaufweitung von Laserstrahlung mit großen Strahldurchmessern hat sich die Verwendung von Parabol(oid)-Spiegeln als günstig erwiesen, da bei der Verwendung von sphärischen Spiegeln zur Strahlaufweitung aufgrund der großen Strahldurchmesser die sphärischen Aberrationen verhältnismäßig groß sind. Bei der Verwendung von Paraboloid-Spiegeln wird hingegen bei einer geeigneten Ausrichtung der Spiegel zueinander eine theoretisch fehlerfreie Abbildung ermöglicht. Wie in der US 2011/0140008 A1 beschrieben ist, kann durch die Strahlaufweitung bzw. die Vergrößerung des Strahldurchmessers des Laserstrahls, beispielsweise um einen Faktor von 3,6, die Divergenz des Laserstrahls reduziert werden, was sich für die Erzeugung der EUV-Strahlung günstig auswirkt. Eine Vorrichtung mit den Merkmalen des Oberbegriffs des Anspruch 1 ist aus der DE102009044426A1 bekannt.

### Aufgabe der Erfindung

Es ist die Aufgabe der vorliegenden Erfindung, eine Strahlführungseinrichtung und ein Verfahren der eingangs genannten Art dahingehend weiterzubilden, dass die Erzeugung von EUV-Strahlung effektiver erfolgen kann.

### Gegenstand der Erfindung

Diese Aufgabe wird erfindungsgemäß gelöst durch eine Strahlführungseinrichtung wie im Anspruch 1 definiert.

Die Erfinder haben erkannt, dass es bei der oben beschriebenen Einrichtung zur Vergrößerung (bzw. Verkleinerung) des Strahldurchmessers möglich ist, durch eine Variation des Abstands zwischen den reflektierenden Oberflächen die Divergenz (bzw. Konvergenz) des Laserstrahls gezielt zu beeinflussen. Die Veränderung der Konvergenz bzw. Divergenz des Laserstrahls wirkt sich günstig auf die Erzeugung der EUV-Strahlung an der Zielposition aus, da der Strahlweg zwischen der Einrichtung und der Zielposition sehr lang ist (in der Regel mehr als10 Meter). Um sicherzustellen, dass der Laserstrahl auch bei sich verändernden Temperaturbedingungen, die u.a. durch dasdynamische thermische Verhalten der optischen Bauteilebestimmt sind, durch alle optischen Bauteile im Strahlweg passt, kann mit Hilfe der oben beschriebenen Einrichtung der Öffnungswinkel, d.h. die Konvergenz bzw. die Divergenz des Laserstrahls gezielt beeinflusst werden. Die Variation der Konvergenz bzw. Divergenz der Laserstrahlung kann bei der Verwendung von zwei Off-Axis Parabolspiegeln durch die Veränderung des Abstands der reflektierenden Oberflächen zueinander erfolgen, ohne dass innerhalb des für die vorliegenden Anwendungen typischer Weise benötigten Variationsbereichs die Abbildungsfehler zu stark zunehmen. Hierbei wirkt sich günstig aus, dass aufgrund des langen Strahlwegs geringfügige Änderungen des Öffnungswinkels (im der Größenordnung von beispielsweise ca. 10-20mrad) bereits einen großen Effekt auf den resultierenden Strahldurchmesser im Bereich der Zielposition haben. Für die Variation des Abstandes kann die Bewegungseinrichtung mittels geeigneter Aktuatoren (Motoren oder dergleichen) an dem ersten und/oder dem zweiten Parabolspiegel angreifen, um deren Position relativ zu einander und damit deren Abstand zu verändern.

Die Bewegungseinrichtung ist typischer Weise zur Bewegung mindestens eines Parabolspiegels ausgehend von einer Grundstellung ausgebildet, in welcher die Fokuspositionen der beiden Parabolspiegel übereinstimmen. In der Grundstellung, bei der die beiden Parabolspiegel dieselbe Fokusposition aufweisen (und bei der die Symmetrieachsen der Parabolspiegel zusammenfallen), werden - zumindest theroretisch -keine Abbildungsfehler erzeugt. Bei einer Variation des Abstands der Off-Axis Parabolspiegel aus der Grundstellung heraus nehmen die Abbildungsfehler zu.

In der Grundstellung wird aus einem kollimiert auf den ersten Parabolspiegel auftreffender Laserstrahl am zweiten Parabolspiegel ein kollimiert austretender Laserstrahl erzeugt. Bei der Änderung des Abstands verändert sich der Strahldurchmesser geringfügig, insbesondere wird aber der Öffnungswinkel des Laserstrahls beeinflusst, so dass aus einem kollimierten Laserstrahl, wie er in der Grundstellung erzeugt wird, ein geringfügig konvergenter bzw. divergenter Laserstrahl gebildet wird. Durch die Vergrößerung des Abstands aus der Grundposition heraus wird typischer Weise aus dem kollimierten austretenden Laserstrahl ein (geringfügig) konvergenter Laserstrahl erzeugt. Bei einer Verkleinerung des Abstands aus der Grundposition heraus wird typischer Weise ein (geringfügig) divergenter austretender Laserstrahl erzeugt.

Bei einer Weiterbildung ist die Einrichtung ausgebildet, in der Grundstellung eine Vergrößerung oder Verkleinerung des Strahldurchmessers zu erzeugen, die zwischen 1,01 und 10,0 liegt. Um dies zu erreichen, ist der Abstand zwischen den beiden reflektierenden Oberflächen in der Grundstellung sowie die Krümmung der reflektierenden Oberflächen geeignet zu wählen.

Wie weiter oben beschrieben wurde, ist die Bewegungseinrichtung zur Verschiebung mindestens eines der Parabolspiegel entlang einer Verschiebeachse ausgebildet. Es ist günstig, wenn bei der Variation des Abstands die reflektierenden Oberflächen ihre Ausrichtung zueinander beibehalten, d.h. wenn zur Veränderung des Abstandes lediglich eine Verschiebung, aber keine Drehung der Parabolspiegel erfolgt. Für die Verschiebung entlang der Verschiebeachse wird der betreffende Parabolspiegel typischer Weise linear beweglich an Führungen gelagert und mittels eines Aktuators, z.B. mittels eines Linearmotors, entlang der Verschieberichtung verschoben.

Bei einer Weiterbildung erfolgt die Verschiebung entlang einer Verschiebeachse, auf der die Fokuspunkte der Parabolspiegel liegen bzw. entlang einer Verschiebeachse, auf welcher die gemeinsame Fokusposition in der Grundstellung liegt. Die Erfinder haben herausgefunden, dass bei einer Verschiebung entlang einer solchen Verschiebeachse die Abbildung über einen erstaunlich großen Variationsbereich aberrationsarm bleibt, so dass sich die Konvergenz/Divergenz über einen verhältnismäßig großen Bereich (bis ca. 10-20mrad) variieren lässt. Die Aberrationen, die bei der Beeinflussung der Strahlkonvergenz bzw. der Strahldivergenz bei Verwendung eines adaptiven Spiegels (d.h. eines Spiegels mit veränderlicher Krümmung) auftreten, sind typischer Weise deutlich größer.

Bei einer weiteren Weiterbildung ist die Bewegungseinrichtung zur Verschiebung des mindestens einen Parabolspiegels über eine Strecke von mindestens 10 mm, bevorzugt von mindestens 50mm, insbesondere von mindestens 100 mm entlang der Verschiebeachse ausgebildet. Eine solche Verschiebung ist in der Regel ausreichend, um die Vergrößerung/Verkleinerung des Strahldurchmessers innerhalb der gewünschten Grenzen vorzunehmen. Bei einer Brennweite des zweiten Parabolspiegels von ca. 500 mm führt eine Verschiebung um ca. 50 mm beispielsweise zu einer Konvergenzänderung (Veränderung des Öffnungswinkels) von ca. 5 mrad, eine Verschiebung um ca. 100 mm für zu einer Konvergenzänderung von ca. 10 mrad.

Erfindungsgemäß umfasst die Strahlführungseinrichtung mindestens einen verschiebbaren Umlenkspiegel zur Kompensation eines Strahlversatzes bei der Verschiebung des mindestens einen Parabolspiegels. Zur Kompensation des Strahlversatzes können insbesondere zwei verschiebbare Umlenkspiegel verwendet werden, die unter solchen Winkeln bzw. um solche Wegstrecken zueinander verschoben werden dass der durch die Verschiebung bedingte Strahlversatz des Laserstrahls kompensiert werden kann.

Erfindungsgemäß ist der (mindestens eine) Umlenkspiegel mit dem (mindestens einen) Parabolspiegel zur gemeinsamen Verschiebung bewegungsgekoppelt. Durch die Bewegungskopplung kann für die gemeinschaftliche Bewegung des Parabolspiegels und des Umlenkspiegels ein gemeinsamer Antrieb der Bewegungseinrichtung genutzt werden, so dass auf eine zusätzliche Steuerung zur Koordination bzw. zur Synchronisation der Verschiebebewegung des Parabolspiegels mit der Bewegung des Umlenkspiegels verzichtet werden kann. Die Verschiebebewegung des Umlenkspiegels muss nicht zwingend entlang der Verschiebeachse für den Parabolspiegel erfolgen, d.h. die Bewegungskopplung kann so ausgelegt werden, dass der Umlenkspiegel in eine von der Verschiebeachse abweichende Richtung verschoben wird. Dies kann z.B. durch eine zwangsgekoppelte Bewegung des Parabolspiegels mit Hilfe einer geeigneten (Zwangs-)Führung erreicht werden.

Bevorzugt ist die Strahlführungseinrichtung zur Führung eines CO₂-Laserstrahlsausgebildet. Für die Führung eines CO₂-Laserstrahls,d.h. eines Laserstrahls mit einer Wellenlänge um ca. 10,6 µm,werden bevorzugt reflektierende optische Elemente verwendet. Diese bestehen typischer Weisezumindest im Bereich ihrer Oberflächen aus metallischen Materialien, z.B. aus Kupfer, auf die in der Regel eine hoch reflektierende Beschichtung aufgebracht wird. Auch transmittierende optische Elemente können zur Strahlführung von CO₂-Laserstrahlung verwendet werden. Es existiert allerdings nur eine kleine Anzahl von Materialien, welche für CO₂-Laserstrahlungtransparent sind. Ein solches Material ist Zinkselenid, welches u.a. für die Linsenherstellung verwendet werden kann.

Ein weiterer Aspekt der Erfindung betrifft ein Verfahren zum Einstellen eines Öffnungswinkels eines Laserstrahls mittels einer Strahlführungseinrichtungwie oben beschrieben, umfassend:Einstellen eines Abstands zwischen der ersten und der zweiten reflektierenden Oberfläche der Parabolspiegelzum Erzeugen des gewünschten Öffnungswinkels des Laserstrahls. Wie weiter oben beschrieben wurde, kann durch das Einstellen des Abstandes der Öffnungswinkel des Laserstrahls gezielt beeinflusst werden, d.h. ausgehend von einem kollimierten austretenden Laserstrahl in der Grundstellung kann ein (geringfügig) konvergenter oder divergenter Laserstrahl erzeugt werden.

Bei einer Variante des Verfahrens wird zum Erzeugen eines austretenden konvergenten Laserstrahls der Abstand zwischen der ersten und der zweiten reflektierenden Oberfläche von der Grundstellung aus vergrößert.Auf diese Weise kann deraustretendeLaserstrahlmit einer Konvergenz bzw. einem Öffnungswinkel in der Größenordnung mehrererMilliradiant erzeugt werden. Die vergleichsweise geringe Konvergenz des Laserstrahls wirkt einer Aufweitung des Laserstrahls entlang des Strahlwegs bis zur Zielposition entgegen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer EUV-Strahlerzeugungsvorrichtung, welche eine Strahlführungseinrichtung und eine Fokussiereinrichtung für einen Laserstrahl aufweist,
- Fig. 2a: eine schematische Darstellungeiner Einrichtung zur Strahlaufweitung des Laserstrahls mit zwei Off-Axis Parabolspiegeln in einer Grundstellung,
- Fig. 2b: eine schematische Darstellung der Einrichtung von Fig. 2a, in welcher der zweite Off-Axis Parabolspiegel entlang einer Verschiebeachse aus der Grundstellung verschoben ist, sowie
- Fig. 3: ein Diagramm, welches den Öffnungswinkel, die Änderung des Strahlversatzes sowie die Änderung des Strahldurchmessers des austretenden Laserstrahls in Abhängigkeit vom Verschiebeweg zeigt.

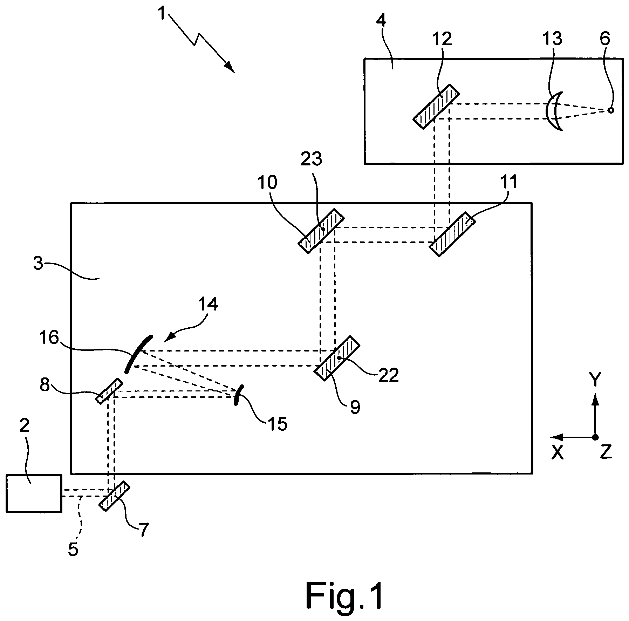

Fig. 1 zeigt eine EUV-Strahlerzeugungsvorrichtung 1, welche eine Treiberlasereinrichtung 2, eine Strahlführungseinrichtung 3 sowie eine Fokussiereinrichtung 4 aufweist, um einen CO₂-Laserstrahl 5 an einer Zielposition 6 zu fokussieren. Die in Fig. 1 gezeigte EUV-Strahlerzeugungsvorrichtung 1 entspricht im Wesentlichen dem Aufbau, wie er in der US 2011/0140008 A1 beschrieben ist. Auf die Darstellung von Messeinrichtungen zur Überwachung des Strahlengangs des Laserstrahls 5 wurde aus Gründen der Übersichtlichkeit verzichtet.

Die Treiberlasereinrichtung 2 umfasst eine CO₂-Strahlquelle sowie mehrere Verstärker zur Erzeugung eines Laserstrahls 5 mit hoher Strahlungsleistung (> 1 kW). Für eine detaillierte Beschreibung von möglichen Ausgestaltungen der Treiberlasereinrichtung 2 sei auf die US 2011/0140008 A1 verwiesen. Von der Treiberlasereinrichtung 2 wird der Laserstrahl 5 über einer Mehrzahl von Umlenkspiegeln 7 bis 11 der Strahlführungseinrichtung 3 sowie eines weiteren Umlenkspiegels 12 der Fokussiereinrichtung 4 auf eine Fokussierlinse 13 umgelenkt, welche den Laserstrahl 5 an der Zielposition 6 fokussiert. An der Zielposition 6 ist Zinn als Target-Material angeordnet, welches von dem fokussierten Laserstrahl 5 getroffen und hierbei in einen Plasma-Zustand übergeführt wird, der zur Erzeugung von (nicht gezeigter) EUV-Strahlung dient. Das Target-Material wird der Zielposition 6 mit Hilfe einer (nicht gezeigten) Bereitstellungseinrichtung zugeführt, welche das Target-Material entlang eines vorgegebenen Pfades führt, welcher die Zielposition 6 kreuzt. Für Details der Bereitstellung des Ziel-Materials sei ebenfalls auf die US 2011/0140008 A1 verwiesen.

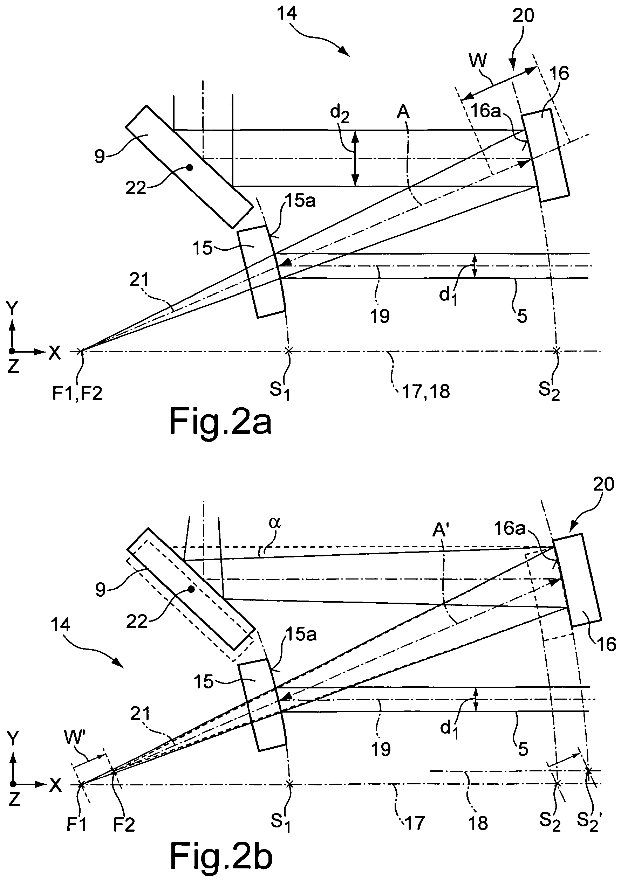

In der Strahlführungseinrichtung 3 ist eine Einrichtung 14 zur Vergrößerung eines Strahldurchmessers des Laserstrahls 5 vorgesehen, welche einen ersten Off-Axis Parabolspiegel 15 mit einer ersten, konvex gekrümmten reflektierenden Oberfläche 15a und einen zweiten Off-Axis Parabolspiegel 16 mit einer zweiten, konkav gekrümmten reflektierenden Oberfläche 16a aufweist. Die reflektierenden Oberflächen 15a, 16a eines Off-Axis Parabolspiegels 15, 16 bilden jeweils die Off-Axis Segmente eines Paraboloids. Der Begriff "Off-Axis" bedeutet, dass die reflektierenden Oberflächen 15a, 15b nicht die Rotationsachse des Paraboloids (und damit auch nicht den Scheitelpunkt des Paraboloids) enthalten, wie in **Fig. 2a****,b** gezeigt ist, welche die Einrichtung 14 zur Vergrößerung des Strahldurchmessers des Laserstrahls 5, im Folgenden auch kurz als Strahlaufweitungseinrichtung 14 bezeichnet, in einer Detaildarstellung zeigen.

Der von der Treiberlasereinrichtung 2 mit einem Strahldurchmesser d1 in der Größenordnung von ca. 30 bis 50 mm ausgehende kollimierte Laserstrahl 5 trifft auf die erste, konvexe reflektierende Oberfläche 15a und wird an dieser in Richtung auf die zweite, konkave reflektierende Oberfläche 16a umgelenkt. An der zweiten reflektierenden Oberfläche 16a wird der auftreffende divergente Laserstrahl 5 umgelenkt undkollimiert, so dass die Strahlrichtung (X-Richtung) des aus der Strahlaufweitungseinrichtung 14 austretenden Laserstrahls 5 mit der Strahlrichtung (X-Richtung) des eintretenden Laserstrahls 5 übereinstimmt. Es versteht sich, dass dies nicht notwendiger Weise der Fall ist, d.h. die Strahlrichtung des austretenden Laserstrahls 5 kann auch unter einem Winkel, beispielsweise unter einem Winkel von 90° (d.h. in Y-Richtung), relativ zur Strahlrichtung des eintretenden Laserstrahls 5 verlaufen. Wie in Fig. 2a ebenfalls zu erkennen ist, weist der Laserstrahl 5 beim Austritt aus der Strahlaufweitungseinrichtung 14 einen Strahldurchmesser d2 auf, welcher zwischen ca. 2 und 3 Mal dem Strahldurchmesser d1 des Laserstrahls 5 beim Eintritt in die Strahlaufweitungseinrichtung 14 entspricht (d.h. d2 = 2,0-3,0 x d1).

Die Strahlaufweitungseinrichtung 14 ist in Fig. 2a in einer Grundstellung gezeigt, bei welcher eine Rotationsachse 17 des ersten Off-Axis Parabolspiegels 15 und eine Rotationsachse 18 des zweiten Off-Axis Parabolspiegels 16 zusammenfallen, d.h. die Scheitelpunkte S1 und S2 der beiden Off-Axis Parabolspiegel 15, 16 liegen auf der gemeinsamen Symmetrieachse 17, 18. Der Abstand A zwischen den beiden Parabolspiegeln 15, 16, welcher entlang der (gefalteten) Strahlachse 19 des Laserstrahls 5 gemessen wird, ist in der Grundstellung so gewählt, dass die Fokuspositionen F1, F2 der beiden Parabolspiegel 15, 16 zusammenfallen. Auf diese Weise kann bei der Aufweitung mittels der beiden eine Teleskopanordnung bildenden Parabolspiegel 15, 16 eine (theoretisch) aberrationsfreie Abbildung erreicht werden.

Für die Erzeugung der EUV-Strahlung ist es günstig, die Divergenz (bzw. Konvergenz) des Laserstrahls 5 einstellbar zu machen. Zu diesem Zweck weist die Strahlaufweitungseinrichtung 14 eine Bewegungseinrichtung 20 auf, welche in Fig. 2a durch einen Doppelpfeil angedeutet ist und welche ausgelegt ist, den zweiten Parabolspiegel 16 entlang einer Verschiebeachse 21 zu bewegen, welche den zwischen den beiden Parabolspiegeln 15, 16 liegenden Abschnitt der Laserstrahlachse 21 sowie die Fokusposition F1, F2 des ersten und zweiten Parabolspiegels 15, 16 in der Grundstellung enthält. Die Bewegungseinrichtung 20 weist (nicht gezeigte) Führungsmittel, z.B. Führungsschienen oder dergleichen, sowie einen Aktuator (Antrieb, z.B. Linearantrieb) auf, welcher mit einer (nicht gezeigten) Halterung des zweiten Parabolspiegels 16 gekoppelt ist, um diesen entlang der Verschiebeachse 21 zu bewegen.

Der maximale Bewegungsweg W des zweiten Parabolspiegels 16 entlang der Verschiebeachse 21, welche die maximale Variation des Abstands A zwischen den Spiegeln festlegt, liegt im vorliegenden Beispiel bei ca. 100 mm, wobei ausgehend von der in Fig. 2a gezeigten Ruhestellung eineerste Hälfte des Bewegungsweges (W/2) zur Verringerung des Abstandes A und die andere Hälfte zur Erhöhung des Abstandes A genutzt werden kann, d.h. der Abstand A kann mit Hilfe der Bewegungseinrichtung 20 im Intervall zwischen A - W/2 und A + W/2 variiert werden. Es versteht sich, dass die Aufteilung der variablen Verringerung bzw. Erhöhung des Bewegungsweges A auch anders als oben beschrieben ausgestaltet sein kann. Insbesondere kann die Bewegungseinrichtung ggf. so ausgelegt werden, dass ausgehend von der in Fig. 2a gezeigten Grundstellung ggf. lediglich eine Verkürzung (oder eine Vergrößerung) des Abstandes A möglich ist.

Fig. 2b zeigt die Strahlaufweitungseinrichtung 14 in einer Stellung, in welcher der zweite Parabolspiegel 16 um einen Betrag W' entlang der Verschiebeachse 21 verschoben ist, wodurch sich ein Abstand A' zwischen den Parabolspiegeln 15, 16 einstellt, der mit dem Abstand A in der Grundstellung wie folgt zusammenhängt: A' = A + W'. Wie in Fig. 2b ebenfalls zu erkennen ist, fallen in der gezeigten Stellung die Symmetrieachsen 17, 18 der Parabolspiegel 15, 16 nicht mehr zusammen. Auch die Fokusposition F2' des zweiten Parabolspiegels 16 sowie der Scheitel S2' sind entsprechend verschoben.

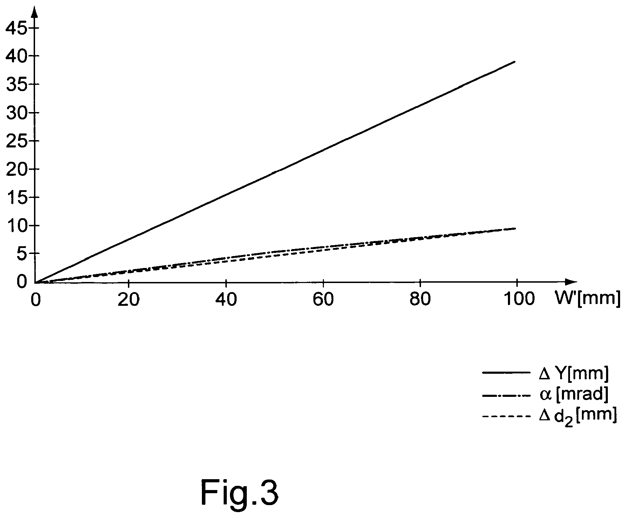

Wie in **Fig. 3** zu erkennen ist, wird durch den vergrößerten Abstand A' zwischen den reflektierenden Oberflächen 15a, 16a der Laserstrahl 5 stärker aufgeweitet und weist beim Austritt aus der Strahlaufweitungseinrichtung 14 nach dem zweiten Parabolspiegel 16 einen Strahldurchmesser auf, der gegenüber dem Strahldurchmesser d2 in der in Fig. 2a gezeigten Grundstellung in Abhängigkeit vom Verschiebeweg W' (= A' - A)um einen Betrag Δd₂vergrößert ist. Es versteht sich, dass durch eine Verkürzung des Abstandes A (vgl. Fig. 2a) ein entsprechend verringerter Strahldurchmesser erzeugbar ist.

Wie ebenfalls anhand von Fig. 3 zu erkennen ist, bewirkt die Erhöhung des Abstandes zwischen den optischen Oberflächen 15a, 16a aus der Grundstellung auch eine Veränderung des (halben) Öffnungswinkels αdes Laserstrahls 5 bezogenauf die Strahl-Ausbreitungsrichtung des Laserstrahls 5, d.h. der austretende Laserstrahl ist konvergent mit einem Öffnungswinkel α, der im Bereich weniger Milliradiant liegt und in Fig. 2b zur Veranschaulichung übertrieben groß dargestellt ist. Entsprechend kann durch eine Verringerung des Abstandes A zwischen den optischen Oberflächen 15a, 16a aus der Grundstellung ein divergenter austretender Laserstrahl 5 erzeugt werden.Insgesamt kann durch eine Veränderung des Abstandessomit die Divergenz/Konvergenz des Laserstrahls 5 gezielt beeinflusst werden.

Insbesondere kann die Divergenz/Konvergenz des Laserstrahls 5 dynamisch in Abhängigkeit von der momentan in der EUV-Strahlerzeugungsvorrichtung 1 vorliegenden Situation eingestellt werden.Die vorliegende Situation ist dabei zum einen durch die (quasi statischen) Aufstellbedingungen gegebenen, zum anderen durch den thermischen Zustand der EUV-Strahlerzeugungsvorrichtung 1, welcher u.a. durch das dynamische thermische Verhalten der Bauteile gekennzeichnet ist. Wie durch einen Vergleich zwischen Fig. 2a und Fig. 2b und aus Fig. 3 ersichtlich ist, führt die Bewegung des zweiten Parabolspiegels 16 entlang der Verschieberichtung 21 auch zu einem Strahlversatz des auf den Umlenkspiegel 9 auftreffenden Laserstrahls 5 in Y-Richtung, und zwar um einen vom Verschiebeweg W' abhängigen Betrag ΔY. Um diesen Strahlversatz zu kompensieren, können der Umlenkspiegel 9 sowie ein weiterer, diesem im Strahlweg nachfolgender Umlenkspiegel 10 um eine jeweilige, in Z-Richtung verlaufende Kippachse 22, 23 verschwenkbarund/oder in Y-Richtung verschiebbar ausgebildet werden. Die Verkippung bzw. Verschiebung der Umlenkspiegel 9, 10 wird so aufeinander abgestimmt, dass der Laserstrahl 5 auf den nachfolgenden Umlenkspiegel 11 an der gewünschten Position (und parallel zur X-Richtung, d.h. im richtigen Winkel ausgerichtet) auftrifft. Es versteht sich, dass der Ausgleich des Strahlversatzes alternativ oder zusätzlich auch mit Hilfe der weiteren Umlenkspiegel 11, 12 oder auf andere Weise erfolgen kann, damit sichergestellt ist, dass der Laserstrahl 5 wie gewünscht von der Fokussierlinse 13 auf die Zielposition 6 fokussiert wird.

In dem die Erfindung definierenden Fall, dass der in Fig. 2b gezeigte Umlenkspiegel 9 in Y-Richtung linear verschoben werden kann, sind der Umlenkspiegel 9 und der Parabolspiegel 16 vorteilhafter Weise in der Bewegung (mechanisch) miteinander gekoppelt, das heißt sie werden durch einen gemeinsamen Antrieb bewegt, und zwar typischer Weise durch den Antrieb bzw. den Aktuator der Bewegungseinrichtung 20. Eine entsprechende Führungsanordnung bewirkt eine Bewegung des Umlenkspiegels 9 und des Parabolspiegels 16 in Y-Richtung und eine zwangsgekoppelte Bewegung des Parabolspiegels 16 sowohl in Y- als auch in X-Richtung entlang der Verschieberichtung 21. Auf diese Weise kann auf eine Steuerungseinrichtung zur Koordination von zwei unabhängigen Bewegungen der beiden Spiegel 9, 16 verzichtet werden. Für den Fall, dass der Umlenkspielgel 9 verschiebbar gelagert ist, muss dieser nicht zwingend zusätzlich um die Kippachse 22 verschwenkbar gelagert werden (und umgekehrt).

Auf die oben beschriebene Weise kann auch eine Verringerung des Strahldurchmessers des Laserstrahls 5 erzeugt werden kann.Zu diesem Zweck ist beim Einbau der Einrichtung 14 lediglich der Strahlweg des Laserstrahls 5 umzukehren, wodurch sich eine (feste) Verkleinerung in der Grundstellung einstellt. Für die Einstellung der Divergenz/Konvergenz wird in diesem Fall der erste Parabolspiegel 15entlang der Verschiebeachse 21 verschiebbar angeordnet.Es versteht sich, dass sowohl bei einer Einrichtung zur Vergrößerung als auch bei einer Einrichtung zur Verkleinerung des Strahldurchmessers ggf. beide Parabolspiegel 15, 16 mittels der Bewegungseinrichtung entlang der Verschiebeachse 21 bewegt werden können. Eine Einrichtung zur Verringerung des Strahldurchmessers kann alternativ oder zusätzlich zur oben beschriebenen Einrichtung 14 zur Vergrößerung des Strahldurchmessers in der Strahlführungseinrichtung 3 angeordnet werden.

Es versteht sich, dass eine optische Einrichtung 14 zur Vergrößerung bzw. zur Verkleinerung des Strahldurchmessers in Kombination mit der oben beschriebenen Möglichkeit, die Konvergenz bzw. Divergenz des Laserstrahls 5 einzustellen, nicht nur bei Strahlführungseinrichtungen für die Erzeugung von EUV-Laserstrahlung, sondern auch in Strahlführungseinrichtungen von anderen optischen Anordnungen vorteilhaft eingesetzt werden kann, insbesondere bei optischen Anordnungen, welche einen sehr langen Strahlweg aufweisen.

## Patentansprüche

1. Strahlführungseinrichtung (3) zur Führung eines Laserstrahls (5) von einer Treiberlasereinrichtung (2) in Richtung auf eine Zielposition (6) zur Erzeugung von EUV-Strahlung, umfassend:
eine Einrichtung (14) zur Vergrößerung oder zur Verkleinerung des Strahldurchmessers (d1) des Laserstrahls (5), mit:
einem ersten Off-Axis Parabolspiegel (15) mit einer ersten, konvex gekrümmten reflektierenden Oberfläche (15a),
einem zweiten Off-Axis Parabolspiegel (16) mit einer zweiten, konkav gekrümmten reflektierenden Oberfläche (16b),
eine Bewegungseinrichtung (20), die ausgebildet ist, zur Veränderung des Öffnungswinkels (α) des Laserstrahls (5) einen Abstand (A, A') zwischen der ersten und der zweiten reflektierenden Oberfläche (15a, 16a) zu verändern, und mindestens einen verschiebbaren Umlenkspiegel (9, 10) zur Kompensation eines Strahlversatzes des Laserstrahls (5) bei der Verschiebung des mindestens einen Parabolspiegels (15, 16),
wobei der mindestens eine Umlenkspiegel (9, 10) mit dem mindestens einen Parabolspiegel (15, 16) zur gemeinsamen Verschiebung bewegungsgekoppelt ist, **dadurch gekennzeichnet,**
**dass** die Bewegungseinrichtung (20) zur Verschiebung mindestens eines der Parabolspiegel (16) über eine Strecke von mindestens 10 mm entlang einer Verschiebeachse (21) ausgebildet ist, und
**dass** die Bewegungskopplung ausgelegt ist, den Umlenkspiegel (9) in eine von der Verschiebeachse (21) abweichende Richtung (Y) linear zu verschieben, die senkrecht zur Strahlrichtung (X) des an dem zweiten Parabolspiegel (16) reflektierten Laserstrahls (5) verläuft.

2. Strahlführungseinrichtung nach Anspruch 1, bei welcher die Bewegungseinrichtung (20) zur Bewegung mindestens eines Parabolspiegels (16) ausgehend von einer Grundstellung ausgebildet ist, in welcher die Fokuspositionen (F1, F2) der beiden Parabolspiegel (15, 16) übereinstimmen.

3. Strahlführungseinrichtung nach Anspruch 2, bei welcher die Einrichtung (14) ausgebildet ist, in der Grundstellung eine Vergrößerung oder Verkleinerung des Strahldurchmessers (d1) zu erzeugen, die zwischen 1,01 und 10 liegt.

4. Strahlführungseinrichtung nach einem der vorhergehenden Ansprüche, bei welcher die Verschiebung entlang einer Verschiebeachse (21) erfolgt, auf der die Fokuspositionen (F1, F2) der Parabolspiegel (15, 16) liegen.

5. Strahlführungseinrichtung nach einem der vorhergehenden Ansprüche, bei welcher die Bewegungseinrichtung (20) zur Verschiebung des mindestens einen Parabolspiegels (16) über eine Strecke von mindestens 50 mm, insbesondere von mindestens 100 mm ausgebildet ist.

6. Strahlführungseinrichtung nach einem der vorhergehenden Ansprüche, die zur Führung eines CO₂-Laserstrahls (5) ausgebildet ist.

7. Verfahren zum Einstellen eines Öffnungswinkels (α) eines Laserstrahls (5) mittels einer Strahlführungseinrichtung (3) nach einem der vorhergehenden Ansprüche, umfassend:
Einstellen eines Abstandes (A, A') zwischen der ersten und der zweiten reflektierenden Oberfläche (15a, 15b) der Parabolspiegel (15, 16) zum Erzeugen eines gewünschten Öffnungswinkels (α) des Laserstrahls (5).

8. Verfahren nach Anspruch 7, bei dem zum Erzeugen eines austretenden konvergenten Laserstrahls (5) der Abstand (A) zwischen der ersten und der zweiten reflektierenden Oberfläche (15a, 15b) ausgehend von der Grundstellung vergrößert wird.

## Claims

1. Beam guide (3) for guiding a laser beam (5) from a driver laser device (2) in the direction of a target position (6) for generating EUV radiation comprising:
a device (14) for increasing or decreasing the beam diameter (d1) of the laser beam (5), having:
a first off-axis parabolic mirror (15) having a first convex curved reflecting surface (15a) and
a second off-axis parabolic mirror (16) having a second concave curved reflecting surface (16b),
a moving device (20) configured to change a distance (A, A') between the first and the second reflecting surfaces (15a, 16a) in order to change an opening angle (α) of the laser beam (5), and
at least one displaceable redirection mirror (9, 10) for compensating for a beam offset of the laser beam (5) when the at least one parabolic mirror (15, 16) is displaced,
wherein the at least one redirection mirror (9, 10) is coupled for movement with the at least one parabolic mirror (15, 16) for conjoined displacement,
**characterized in that**
the moving device (20) is configured to shift the at least one parabolic mirror (16) over a distance of at least 10 mm along a displacement axis (21), and
wherein the movement coupling is configured to displace the redirection mirror (9) in a linear manner in a direction (Y) that deviates from the displacement axis (21), which direction (Y) runs perpendicular to the beam direction (X) of the laser beam (5) that is reflected at the second parabolic mirror (16).

2. Beam guide according to claim 1, wherein the moving device (20) is configured for moving at least one parabolic mirror (16) from a starting position in which the focal positions (F1, F2) of the two parabolic mirrors (15, 16) coincide.

3. Beam guide according to claim 2, wherein the device (14) is configured to generate in the starting position an increase or decrease of the beam diameter (d1) which is between 1.01 and 10.

4. Beam guide according to any one of the preceding claims, wherein the shift is carried out along a displacement axis (21) on which the focal positions (F1, F2) of the parabolic mirrors (15, 16) are located.

5. Beam guide according to any one of the preceding claims, wherein the moving device (20) is configured to shift the at least one parabolic mirror (16) over a distance of at least 50 mm, in particular of at least 100 mm.

6. Beam guide according to any one of the preceding claims, which is configured to guide a CO₂ laser beam (5).

7. Method for adjusting an opening angle (α) of a laser beam (5) by means of a beam guide (3) according to any one of the preceding claims, comprising:
adjusting a distance (A, A') between the first and the second reflecting surfaces (15a, 15b) of the parabolic mirrors (15, 16) for generating a desired opening angle (α) of the laser beam (5).

8. Method according to claim 7, wherein, for generating a convergent outgoing laser beam (5), the distance (A) between the first and the second reflecting surfaces (15a, 15b) is increased from the starting position.

## Revendications

1. Dispositif de guidage de rayon (3) permettant de guider un rayon laser (5) depuis un dispositif de laser d'excitation (2) en direction d'une position cible (6) afin de générer un rayonnement UVE, comprenant :
un dispositif (14) permettant d'augmenter ou de diminuer le diamètre de rayon (d1) du rayon laser (5), comprenant :
un premier miroir parabolique désaxé (15) présentant une première surface réfléchissante (15a) à courbure convexe,
un second miroir parabolique désaxé (16) présentant une seconde surface réfléchissante (16b) à courbure concave,
un dispositif de déplacement (20) conçu pour modifier une distance (A, A') entre les première et seconde surfaces réfléchissantes (15a, 16a) afin de modifier l'angle d'ouverture (α) du rayon laser (5), et au moins un miroir de renvoi (9, 10) déplaçable permettant de compenser un décalage de rayon du rayon laser (5) lors du déplacement du au moins un miroir parabolique (15, 16),
le au moins un miroir de renvoi (9, 10) étant couplé en mouvement avec le au moins un miroir parabolique (15, 16) en vue d'un déplacement commun,
**caractérisé en ce que**
le dispositif de déplacement (20) est conçu pour déplacer au moins un des miroirs paraboliques (16) sur une distance d'au moins 10 mm le long d'un axe de déplacement (21), et
le couplage de mouvement est conçu pour déplacer le miroir de renvoi (9) de manière linéaire dans une direction (Y) différente de l'axe de déplacement (21) et s'étendant de manière perpendiculaire par rapport à la direction de rayon (X) du rayon laser (5) réfléchi au niveau du second miroir parabolique (16).

2. Dispositif de guidage de rayon selon la revendication 1, dans lequel le dispositif de déplacement (20) est conçu pour déplacer au moins un miroir parabolique (16) à partir d'une position de base au sein de laquelle les positions de focalisation (F1, F2) des deux miroirs paraboliques (15, 16) coïncident.

3. Dispositif de guidage de rayon selon la revendication 2, dans lequel le dispositif (14) est conçu pour, dans la position de base, générer une augmentation ou une diminution, située entre 1,01 et 10, du diamètre de rayon (d1).

4. Dispositif de guidage de rayon selon l'une quelconque des revendications précédentes, dans lequel le déplacement s'effectue le long d'un axe de déplacement (21) sur lequel se trouvent les positions de focalisation (F1, F2) des miroirs paraboliques (15, 16).

5. Dispositif de guidage de rayon selon l'une quelconque des revendications précédentes, dans lequel le dispositif de déplacement (20) est conçu pour déplacer le au moins un miroir parabolique (16) sur une distance d'au moins 50 mm, en particulier d'au moins 100 mm.

6. Dispositif de guidage de rayon selon l'une quelconque des revendications précédentes, conçu pour guider un rayon laser CO₂ (5).

7. Procédé de réglage d'un angle d'ouverture (α) d'un rayon laser (5) au moyen d'un dispositif de guidage de rayon (3) selon l'une quelconque des revendications précédentes, comprenant l'étape consistant à :
ajuster une distance (A, A') entre les première et seconde surfaces réfléchissantes (15a, 15b) des miroirs paraboliques (15, 16) afin de générer un angle d'ouverture (α) souhaité du rayon laser (5).

8. Procédé selon la revendication 7, dans lequel la distance (A) entre les première et seconde surfaces réfléchissantes (15a, 15b) est augmentée à partir de la position de base afin de générer un rayon laser (5) convergent sortant.
